Europäisches Patentamt

(19) European Patent Office

Office européen des brevets

(11) Publication number: **0 060 102**
**A2**

(12) # EUROPEAN PATENT APPLICATION

(21) Application number: 82301127.5

(22) Date of filing: 05.03.82

(51) Int. Cl.³: **F 16 H 1/455**

(30) Priority: **10.03.81 GB 8107473**

(43) Date of publication of application:
**15.09.82 Bulletin 82/37**

(84) Designated Contracting States:
**AT BE CH DE FR IT LI LU NL SE**

(71) Applicant: **T.T. BOUGHTON & SONS LIMITED
Bell Lane
Amersham Bucks HP6 6PE(GB)**

(72) Inventor: **Boughton, Thomas Trafford
T.T. BOUGHTON & SONS LIMITED Bell Lane
Amersham Bucks HP6 6PE(GB)**

(74) Representative: **Kirby, Harold Douglas Benson et al,
G.F. Redfern & Company Marlborough Lodge 14
Farncombe Road
Worthing West Sussex BN11 2BT(GB)**

(54) Improvements in or relating to differential gears.

(57) This invention relates to differential gears for mechanically propelled vehicles, and it is an object of the invention to reduce spinning of one wheel or axle of a vehicle in icy or muddy conditions. This result is achieved by feeding oil through passages in the sun gear to the meshing teeth of the sun gear and the planet wheels. Thus, if one wheel or axle starts to spin, there will be relative rotation between the sun gear and the planet wheels which will then act like a gear pump. The sun gear and the planet wheels are located in a relatively confined space so that the rate at which the oil can be dissipated is limited. The load caused by the oil pumping limits rotation between the sun gear and the planet wheels, and enables torque to be applied to the slipping wheel or axle.

Croydon Printing Company Ltd.

./...

Fig.1

1

IMPROVEMENTS IN OR RELATING TO DIFFERENTIAL GEARS:

This invention relates to differential gears and is particularly, but not exclusively, applicable to differential gears for mechanically propelled vehicles.

It is well-known that, in most mechanically propelled vehicles, a differential gear is provided between the vehicle engine and the driven wheels. If there is only a single pair of driven wheels, the differential gear is provided to enable the driven wheels to rotate at different speeds when the vehicle is travelling along a curved path. When there are two or more pairs of driven wheels, it is also normal practice to provide a differential gear between each driven pair so that these pairs can rotate at different speeds.

It is well-known that problems exist with known differential gears because, for example in the case of the single pair of driven wheels, if one wheel slips because it is on softer ground than the other wheel, there is no traction applied to said other wheel. Similarly, in the case of vehicles with a plurality of driven axles, if the wheels of one axle slip, there is no torque applied to the other axle or axles.

In the case of vehicles with a plurality of driven axles, it is normal practice to overcome this problem by providing a differential lock. This lock inhibits the differential action of the differential gear so that the two axles are constrained to rotate at the same speed. This arrangement is normally effective on soft ground, but can be dangerous when the vehicle is driven on hard ground if the lock is not released.

It is an object of the present invention to provide a differential gear in which, even when the loads on the two output shafts of the gear are different, at least some torque is always provided to the output shaft having the greatest load.

From one aspect the invention consists in a differential gear comprising:   an input shaft driving a planet wheel carrier; a first output shaft driven by a first gear wheel meshing with the planet wheels of said carrier; a second output shaft driven by a second gear wheel meshing with said planet wheels; and means for introducing fluid under pressure between the meshing teeth of said planet wheels and at least one of said gear wheels in order to restrict relative rotation between said planet wheels and said gear wheels.

It is to be understood that the introduction of fluid under pressure causes each of the planet wheels, in combination with one or both of the gear wheels, to act like a gear pump.  This pumping action imposes a load on the planet wheel which tends to restrict relative rotation between that planet wheel and the gear wheel with which it is in mesh.

It is to be understood that references herein to the introduction of fluid under pressure includes pressure produced as the result of gravity.  Thus, for example, a reservoir of fluid may be provided at a height above the height of the differential gear, and this reservoir may be connected to the planet wheels or said at least one of said gear wheels by suitable ducting.  It is also to be understood that, in a normal differential gear, the gears run in relatively wide open spaces and are lubricated by splash.  In accordance with the present invention, on the cther hand, the gears run in relatively confined spaces and thus trap the oil to impose a load on the planet wheels as hereinbefore referred to.

The invention may be applied to a conventional differential gear of the type normally used in a vehicle with a single driven axle. In this case, the propeller shaft of the vehicle normally drives a bevel pinion in mesh with a crown wheel. The crown wheel carries a cage having an axle perpendicular to its own axis of rotation. This axle carries a pair of planet pinions which are both in mesh with a pair of sun gears carried on coaxial shafts. One of the coaxial shafts drives the off-side driven wheel of the vehicle, while the other shaft drives the near-side driven wheel.

In the case of the conventional differential gear described above, the planet wheel carrier is constituted by the cage, the planet wheels are constituted by the two planet pinions, and the first and second gear wheels are constituted respectively by the two sun gears.

In this particular arrangement, the fluid, which is preferably oil, may be introduced, for example, into the two coaxial shafts. An axial passage is provided in each of these shafts which communicates with a plurality of radial passages in the respective sun gear. These radial passages open between adjacent teeth of the sun gear so that oil is pumped to the interface between the teeth of the sun gear and the planet pinions. Thus the pumping action will impose a load on relative rotation between each sun gear and the differential planet pinions which will allow differential rotation between the two coaxial shafts up to a predetermined speed, but will inhibit relative rotation between the two coaxial shafts if this rotation exceeds the predetermined limit. This limit is set by the rate at which the oil can be dissipated from the interfaces between the meshing teeth, and can be determined by the tolerance allowed in the design of the teeth.

Whilst the invention is applicable to the type of differential already described, it is particularly advantageous in the type of differential which is normally known as a proportioning differential. This type of differential is used particularly in vehicles having a plurality of driven axles being located between the propeller shafts driving the respective axles.

A proportioning differential comprises a planet wheel carrier on which is mounted a plurality of planet wheels rotatable about axes parallel to the axis of rotation of the carrier. These planet wheels are in mesh with a sun wheel which is fixed to the first output shaft of the differential. The planet wheels are also in mesh with internal teeth of an annular gear which is fixed to the second output shaft. It is to be understood that, in a differential of this kind, the torque supplied by the input shaft is divided between the two output shafts in proportion to the gear-ratio between the sun wheel and the annulus.

In this particular arrangement, oil under pressure is preferably provided to an axial passage in the shaft carrying the sun wheel. This axial passage communicates with a plurality of radial passages which open between adjacent teeth of the sun wheel. Thus again oil is provided to the interface between the teeth of the sun wheel and the teeth of the planet wheels, and relative rotation between the sun wheel and the planet wheels is restricted by the load imposed on these wheels by the pumping action.

It is, of course, to be understood that, when the two output shafts of a differential gear in accordance with the invention are rotating at the same speed, there is no relative rotation between the gear wheels and the planet wheels and, accordingly, no load is imposed by the oil except that which is required to supply the oil under pressure.

BAD ORIGINAL

5

In a modification of the invention as applied to a proportioning differential, additional gear wheels are rotatably mounted on the planet wheel carrier. These gear wheels are of a slightly smaller diameter than the planet wheels, and each is in mesh with a respective one of the planet wheels. However, they are so located that they are not in mesh with either the sun wheel or the annulus. Thus each planet wheel and its associated gear wheel can be designed as a true gear-pump so that the amount of load applied by the pumping action on the planet wheels can be accurately determined and readily altered if desired by changing the gear wheels. Thus the main components of the differential can always be standard, and the differential can be adjusted for different conditions by supplying interchangeable gear wheels.

It is also to be understood that the restriction on relative rotation between the two output shafts can be adjusted by providing a variable-delivery oil pump for supplying the oil to the interfaces.

From another aspect the invention consists in any features of novelty, taken singly or in combination, of the proportioning differential gear shown in the accompanying diagrammatic drawings, in which:

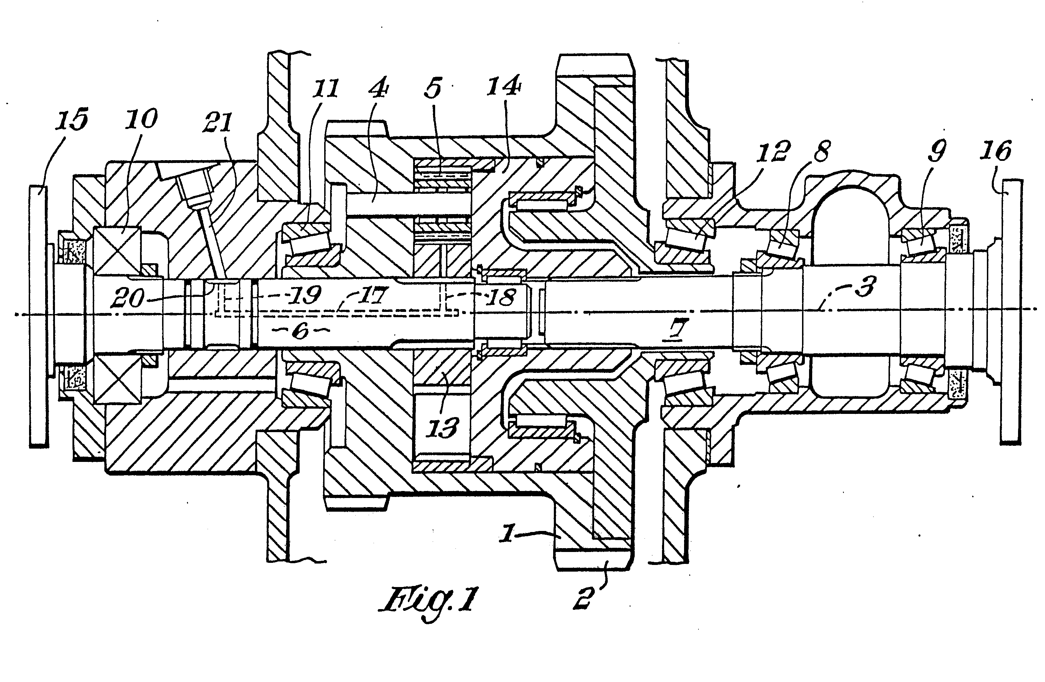

Figure 1 is a side view partly in section of a differential gear in accordance with the invention; and

Figure 2 is a cross-sectional view of a modified form of the differential gear illustrated in Figure 1.

The differential gear illustrated includes a planet wheel carrier 1 provided with gear teeth 2 by means of which it can be rotated about an axis 3. The carrier 1 is provided with three shafts such as that illustrated at 4, on each of which is rotatably mounted a planet wheel 5.

The differential gear illustrated includes two output shafts 6 and 7 which are also rotable about the axis 3. As shown, the shaft 7 is mounted for rotation in tapered roller bearings 8 and 9, and the output shaft 6 is rotatable in a bearing 10. The planet wheel carrier 1 is rotatably mounted on the shafts 6 and 7 by means of respective tapered roller bearings 11 and 12.

Fixed to the shaft 6 is a sun wheel 13 which meshes with the planet wheels 5. Fixed to rotate with the shaft 7 is an annular gear 14 which also is in mesh with the planet wheels 5.

The differential gear illustrated is intended for connection between the propeller shafts of two pairs of driven axles of a vehicle. The shaft 6 is connected to the propeller shaft for the forward axle by means of a coupling plate 15, and the shaft 7 is connected to the rear propeller shaft by means of a plate 16. The propeller shaft from the vehicle engine carries a gear wheel which meshes with the teeth 2 on the planet wheel carrier 1.

If the loads on the two axles are equal, rotation of the planet wheel carrier 1 by means of the vehicle engine will cause the shafts 6 and 7 to rotate at the same speed and in the same direction. However, the differential gear allows relative rotation between the two shafts to take up slip or unequal speeds of rotation due to turning of the vehicle.

7

In accordance with the invention, an axial drilling 17 is provided in the shaft 6, and this axial drilling communicates at one end with a plurality of radial drillings 18, and, at the other end, with a radial drilling 19. The radial drilling 19 communicates with an annular chamber 20 to which oil is supplied under pressure through a channel 21. The radial drillings 18 pass through the sun wheel 13 and open between adjacent teeth of the sun wheel. Thus oil is supplied under pressure from the channel 21 to the interfaces between the teeth of the sun wheel 18 and the teeth of the respective planet wheels 5. Thus the mating teeth act in the manner of a gear pump and relative rotation between the planet wheels and the sun wheel is limited by the speed at which the oil can be dissipated from these interfaces. Thus relative rotation between the shafts 6 and 7 is limited and, if the wheels of one axle commence to slip, drive will still be applied to the other axle because of the inhibiting action of the oil between the teeth of the planet wheels and the sun wheel.

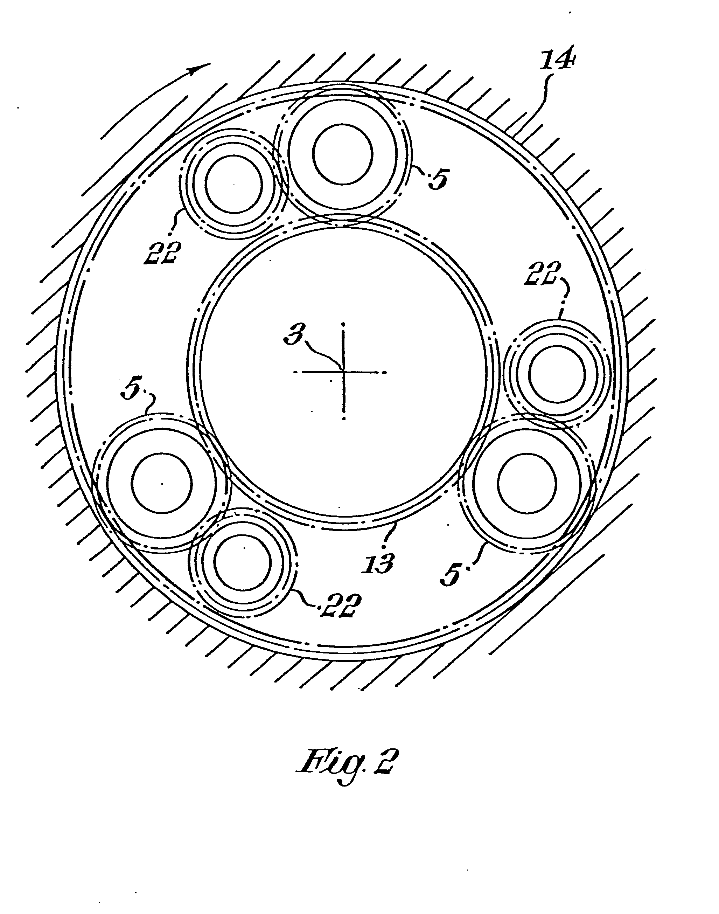

In the modified form of the invention shown in Figure 2, additional gear wheels 22 are provided in mesh with the planet wheels 5. These gear wheels 22 are rotatably mounted in the planet wheel carrier 1 and are dimensioned so that they are not in mesh with either the sun gear 3 or the annulus 14. However, each one of these gear wheels, in combination with the respective planet wheel 5, constitutes a true gear pump. Thus the tolerances between the teeth of these gear wheels and the respective planet wheels can be chosen to provide the required degree of restriction on rotation of the planet wheels.

8

CLAIMS:

1.       A differential gear comprising: an input shaft driving a planet wheel carrier; a first output shaft driven by a first gear wheel meshing with the planet wheels of said carrier; a second output shaft driven by a second gear wheel meshing with said planet wheels; and means for introducing fluid under pressure between the meshing teeth of said planet wheels and at least one of said gear wheels in order to restrict relative rotation between said planet wheels and said gear wheels.

2.       A differential gear as claimed in Claim 1, wherein fluid is introduced between said meshing teeth under the influence of gravity.

3.       A differential gear as claimed in Claim 1, wherein the fluid is introduced between said meshing teeth by means including a pump.

4.       A differential gear as claimed in any of the preceding Claims, wherein said planet wheels and gear wheels run in a confined space designed to trap the fluid and thus impose a load on the planet wheels.

5.       A differential gear as claimed in any of the preceding Claims, wherein said fluid is oil.

6.       A differential gear as claimed in any of the preceding Claims, wherein said planet wheels are bevel pinions mounted on an axle fixed in said carrier and perpendicular to the axis of rotation of the carrier, wherein said first and second gear wheels are two sun bevel gears in mesh with said planet pinions, and carried on coaxial shafts constituting respectively said first and second output shafts.

7.    A differential gear as claimed in Claim 6, wherein the fluid is introduced into an axial passage in each of said coaxial shafts, wherein each of said axial passages communicates with a plurality of radial passages in the respective sun gear, and wherein said radial passages open between adjacent teeth of the respective sun gear.

8.    A differential gear as claimed in any of Claims 1 to 5, wherein said planet wheels are rotatable about respective axes parallel to the axis of rotation of the carrier and are in mesh with a sun wheel which is fixed to said first output shaft, and wherein the planet wheels are also in mesh with internal teeth of an annular gear which is fixed to the second output shaft.

9.    A differential gear as claimed in Claim 8, wherein the fluid is introduced into an axial passage in the shaft carrying the sun wheel, which axial passage communicates with a plurality of radial passages which open between adjacent teeth of the sun wheel.

10.    A differential gear as claimed in Claim 8 or Claim 9, wherein additional gear wheels having a diameter smaller than the planet wheels are rotatably mounted on the planet wheel carrier each in mesh with a respective one of said planet wheels, each of said planet wheels and its associated gear wheel being adapted to act as a gear pump.

10

11.    A differential gear substantially as hereinbefore described with reference to, and as illustrated in, the accompanying diagrammatic drawings.

Fig.1

0060102

Fig. 2